# EUROPÄISCHE PATENTSCHRIFT

(11) **EP 0 803 353 B1**
(45) Veröffentlichungstag und Bekanntmachung des Hinweises auf die Patenterteilung: **12.01.2000**
(21) Anmeldenummer: 96106355.9
(22) Anmeldetag: 23.04.1996
(51) Int. Cl.: B32B 31/06

(54) **Verfahren zum beidseitigen Kaschieren von Trägerbögen mit je einem Deckbogen und Einrichtung zum Durchführen des Verfahrens**
Process for two sided lining of support sheets and apparatus therefor
Procédé pour revêtir deux faces de feuilles de support avec des feuilles et dispositif pour sa mise en oeuvre

(43) Veröffentlichungstag der Anmeldung: 29.10.1997
(73) Patentinhaber: TÜNKERS MASCHINENBAU GmbH, D-40880 Ratingen (DE)
(72) Erfinder: Behn, Rolf Dieter, D-40595 Düsseldorf (DE)
(74) Vertreter: Beyer, Rudi

(56) Entgegenhaltungen:
- DE-A- 1 511 291
- DE-A- 2 945 442
- DE-A- 4 216 691
- US-A- 4 288 274
- US-A- 4 624 719

## Beschreibung

Die Erfindung betrifft ein Verfahren zum beidseitigen Kaschieren eines Trägerbogens mit je einem Deckbogen, wobei die miteinander zu verbindenden, mit Leim versehenen Bögen unter Druck miteinander einstückig verbunden werden.

Des weiteren betrifft die Erfindung eine Einrichtung zum Durchführen des Verfahrens.

Ein- und beidseitiges Kaschieren eines Trägerbogens mit je einem Deckbogen ist bekannt. Beim einseitigen Kaschieren wird auf der Oberseite des Trägerbogens in einem Leimwerk der zum Verbinden notwendige Kleber aufgetragen. Eine nachfolgende Preßvorrichtung verbindet dann die beiden Bögen.

Ist es jedoch erforderlich, den Trägerbogen beidseitig mit je einem Deckbogen zu kaschieren, dann ist es erforderlich, den Trägerbogen gemäß dem vorbeschriebenen Verfahren zunächst einseitig mit einem Deckbogen zu kaschieren und anschließend den so kaschierten Trägerbogen in einem Stapelwender um 180 Grad zu drehen und erneut durch die Einrichtung zu schicken. Dadurch ist die Anlage doppelt so lange belegt, wie es eigentlich erforderlich wäre. Nach dem Wenden muß der Trägerbogen mit dem aufkaschierten Deckbogen im Kaschierwerk auf der gegenüberliegenden Bogenkante positioniert werden. Das Umstellen der Anschläge erfordert weitere Rüstzeiten. Weiterhin ist nachteilig, daß nach dem ersten Durchlauf die nur einseitig kaschierten Trägerbögen bis zur vollständigen Verarbeitung normalerweise zwischengelagert werden. Bei dieser Zwischenlagerung trocknet der Kleber aus, was zu Verformungen der Bögen führt. Durch diese verformten Bögen kann es zu Störungen am Einlauf des Leimwerks und einer ungenauen Kaschierung des zweiten Deckbogens kommen.

Der Erfindung liegt die Aufgabe zugrunde, zunächst ein Verfahren zu schaffen, das die dem Stand der Technik anhaftenden Nachteile restlos beseitigt und darüber hinaus den Vorteil einer besseren Leistung bei hoher Qualität aufweist.

Außerdem soll eine erfindungsgemäße Einrichtung geschaffen werden, mit der sich das erfindungsgemäße Verfahren durchführen läßt.

Die Aufgabe hinsichtlich des Verfahrens wird durch die in **Patentanspruch 1** wiedergegebenen Merkmale gelöst.

Das erfindungsgemäße Verfahren ermöglicht im kontinuierlichen Durchlaufverfahren das doppelseitige Kaschieren von Trägerbögen. Im Bedarfsfalle ist aber mit dem Verfahren auch nur eine einseitige Kaschierung möglich. In diesem Falle wird der Deckbogen auf der nicht zu kaschierenden Seite des Trägerbogens einfach weggelassen.

Ein weiterer Vorteil ergibt sich dadurch, daß die Rüstkosten erheblich geringer sind als beim Stand der Technik, da unter anderem keine Umstellung von Anschlägen mehr notwendig ist.

Wegen der nicht mehr erforderlichen Zwischenlagerung von nur einseitig kaschierten Trägerbögen kann es auch nicht mehr zu Verformungen kommen, so daß die Qualität der doppelseitig kaschierten Trägerbögen deutlich besser ist als bei den vorbekannten Verfahren.

Dadurch, daß im kontinuierlichen Durchlaufverfahren gearbeitet werden kann, ergibt sich eine wesentlich höhere Nennleistung.

Da der Wendevorgang entfällt, kommt es auch zu Energieeinsparungen, die bis zu 40 Prozent für den zweiten Durchlauf mit Ein- und Ableger beim Stand der Technik zu Buche schlägt.

Alles in allem sichert das erfindungsgemäße Verfahren Arbeitsplätze und damit Existenzen.

Weitere erfinderische Verfahrensweisen sind in den **Patentansprüchen 2** bis **9** beschrieben.

Bei Anwendung des Verfahrens nach **Patentanspruch 2** wird der untere Deckbogen dem Trägerbogen unter einem spitzen Winkel zugeführt. Dadurch läßt sich der untere Deckbogen allmählich auf die Unterseite des Trägerbogens aufkaschieren, so daß es auch nicht zu Lufteinschlüssen kommt.

Vorteilhafterweise wird auch der obere Deckbogen unter einem spitzen Winkel dem Trägerbogen zugeführt (**Patentanspruch 3**).

Bei einer sehr vorteilhatten Verfahrensweise gemäß der Erfindung wird der obere Deckbogen in Durchlaufrichtung zuerst mit dem Trägerbogen durch Kaschieren verbunden, bevor der untere Deckbogen den Trägerbogen zugeführt und mit diesem durch Kaschieren verbunden wird (**Patentanspruch 4**).

Nach dem erfindungsgemäßen Verfahren werden die Oberseiten von Trägerbogen und der von unten zukommende Deckbogen an seiner Oberseite mit Leim versehen (**Patentanspruch 5**).

Erfindungsgemäß werden der Trägerbogen und der Deckbogen jeweils in horizontaler Lage mit Leim versehen, bevor der Deckbogen auf einer Bahn bewegt wird, die spitzwinklig zur Transportebene des Trägerbogens verläuft. (**Patentanspruch 6**). Dadurch läßt sich der Leim tropffrei und schnell aufbringen, bevor er auf den Trägerbogen aufkaschiert wird.

Gemäß **Patentanspruch 7** wird mindestens der untere Deckbogen im Bezug auf den Trägerbogen quer und/oder in Durchlaufrichtung des Trägerbogens kanten- und paßgenau ausgerichtet. Dadurch sind keine Nacharbeiten, zum Beispiel ein Kantenschneiden des beidseitig kaschierten Trägerbogens mehr erforderlich.

Besonders vorteilhaft ist es, wenn gemaß **Patentanspruch 8** der untere Deckbogen durch Unterdruck zum Zwecke des Ausrichtens unabhängig vom Trägerbogen transportiert wird. Auf diese Weise hat man es zum Beispiel in der Hand, den unteren Deckbogen orthogonal zur Durchlaufrichtung des Trägerbogens zur einen oder anderen Seite, gegebenenfalls aber auch in Achsrichtung der Förderrichtung zu bewegen, um ein kanten- und paßgenaues Ausrichten des betreffenden Deckbogens in Bezug auf den Trägerbogen zu bewerkstelligen.

Erfindungsgemäß wird der mit einem oberen Deckbogen bereits kaschierte Trägerbogen vor dem paßgenauen Zuführen und Kaschieren mit dem unteren Deckbogen abgestoppt und quer zur Förderrichtung ausgerichtet, bevor der Deckbogen ausgerichtet und mit der Unterseite des Trägerbogens verbunden wird. Dadurch hat man es in der Hand, Koordinaten oder Ebenen vorzugeben, in denen der Trägerbogen angeordnet wird, zu denen der zu kaschierende Deckbogen, insbesondere der untere Deckbogen, paßgenau zugeführt wird. Die Lagepunkte des einseitig kaschierten Trägerbogens können dadurch in eine Steuerung eingegeben und anschließend aufgrund dieser Werte der untere Deckbogen der Unterseite des einseitig kaschierten Trägerbogens kanten- und paßgenau zugeführt und durch Kaschieren mit dieser verbunden werden (**Patentanspruch 9**).

Was die die Einrichtung ansprechende Aufgabe anbelangt, so wird diese durch die in **Patentanspruch 10** wiedergegebenen Merkmale gelöst. Dieser Patentanspruch beschreibt eine erfindungsgemäße Einrichtung, bei der unterhalb der Förderbahn für den Trägerbogen ein motorisch angetriebener Förderer angeordnet ist, dessen Förderbahn unter einem spitzen Winkel zur Förderbahn des Trägerbogens verläuft, auf der der untere Deckbogen spitzwinklig durch einen motorisch angetriebenen Förderer herangefördert wird. Dem motorisch angetriebenen Förderer für den Trägerbogen ist mindestens eine, vorzugsweise aber zwei im Abstand zueinander angeordnete, motorisch ansteuerbare Ausrichtvorrichtung zugeordnet, durch die sich der Trägerbogen orthogonal zu seiner Förderrichtung bewegen und damit ausrichten läßt.

Bei einer vorteilhaften Ausführungsform der Erfindung sind gemäß **Patentanspruch 11** sowohl dem Förderer für den mit dem oberen Deckbogen kaschierten Trägerbogen als auch dem Förderer für den unteren Deckbogen je ein motorisch, z. B. pneumatisch bewegbarer, jeweils in den Förderweg hineinragender Anschlag zugeordnet. Der einseitig kaschierte Trägerbogen läuft somit, von dem Förderer, auf dem er sich befindet, angetrieben, bis gegen den Anschlag, woraufhin der Antrieb für die Fördervorrichtung stillgesetzt wird, während der untere Deckbogen durch seinen Förderer ebenfalls bis zu dem ihm zugeordneten Anschlag bewegt wird, woraufhin ebenfalls der Antrieb für diesen Förderer stillgesetzt wird. Dann erfolgt zunächst das seitliche Ausrichten des einseitig kaschierten Trägerbogens durch die Ausrichtvorrichtungen, worauf anschließend das Querausrichten des unteren Deckbogens und das Zufördern des ausgerichteten Deckbogens zur Unterseite des Trägerbogens erfolgt, woraufhin der bereits einseitig kaschierte Trägerbogen in einer Druckvorrichtung mit dem unteren Deckbogen durch Kaschieren verbunden wird.

In **Patentanspruch 12** ist eine weitere vorteilhafte Ausführungsform der Erfindung beschrieben.

Eine bevorzugte Ausführungsform beschreiben die **Patentansprüche 13** und **14**.

Weitere vorteilhafte Ausführungsformen sind in den **Patentansprüchen 15** bis **20** beansprucht.

Gemäß **Patentanspruch 20** sind die motorischen, z. B. pneumatischen und/oder elektrischen Antriebe, die Ausrichtvorrichtung, die Anschläge und die Saugvorrichtung mit ihren motorischen Antrieben jeweils in eine Folgesteuerung eingebunden, die den sinnvollen Ablauf der Bewegungen der Förderer, der Anschläge und der Saugvorrichtungen sowie der Beleimungsvorrichtungen steuert.

In der Zeichnung ist die Erfindung - teils schematisch - beispielsweise veranschaulicht. Es zeigen:

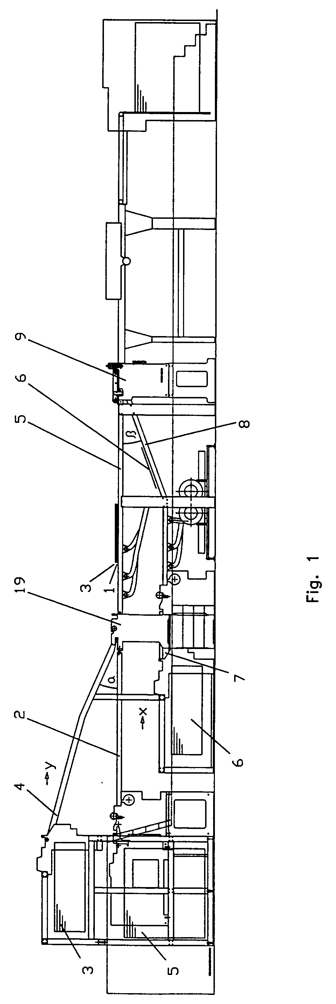

- Fig. 1: eine Einrichtung gemäß der Erfindung in der Seitenansicht;
- Fig. 2: eine Teilansicht der Fig. 1 im Bereich der zweiten Kaschierstation zum Zuführen des unteren Deckbogens, in größerem Maßstab und
- Fig. 3: eine Ansicht in Richtung des Pfeiles A der Fig. 2.

In einem Gerüst ist ein Stapel Trägerbögen 1 angeordnet, von dem aus über einen motorisch angetriebenen Förderer 2 einzeln die Trägerbögen 1 in Richtung X transportiert werden.

Oberhalb des Stapels Trägerbögen 1 ist ein Stapel oberer Deckbögen 3 angeordnet. Die oberen Deckbögen 3 werden nacheinander durch einen motorisch angetriebenen Förderer 4 in Richtung Y unter einem spitzen Winkel α zur horizontal verlaufenden Förderrichtung X nach unten bis in die Ebene der Trägerbögen 1 gefördert. In einer ersten Kaschierstation 19 werden die oberen Deckbögen 3 an ihrer Unterseite mit einer Leimschicht versehen und in einem nachfolgenden Druckwerk durch Zusammenpressen mit dem Trägerbogen 1 kaschiert.

Der an seiner Oberseite mit einem Deckbogen 3 kaschierte Trägerbogen 1 wird durch einen motorisch angetriebenen, als Bandförderer ausgebildeten Förderer 5 weiter in Richtung X transportiert.

Unterhalb des Förderers 2 ist ein Stapel unterer Deckbögen 6 angeordnet, die über einen motorisch angetriebenen Förderer 7 ebenfalls in horizontaler Richtung in Richtung X weitertransportiert werden, bis sie einen motorisch angetriebenen Förderer 8 erreichen, auf dem die unteren Deckbögen 6 unter einem spitzen Winkel β zur Förderbahn des Förderers 5 weiterbefördert werden.

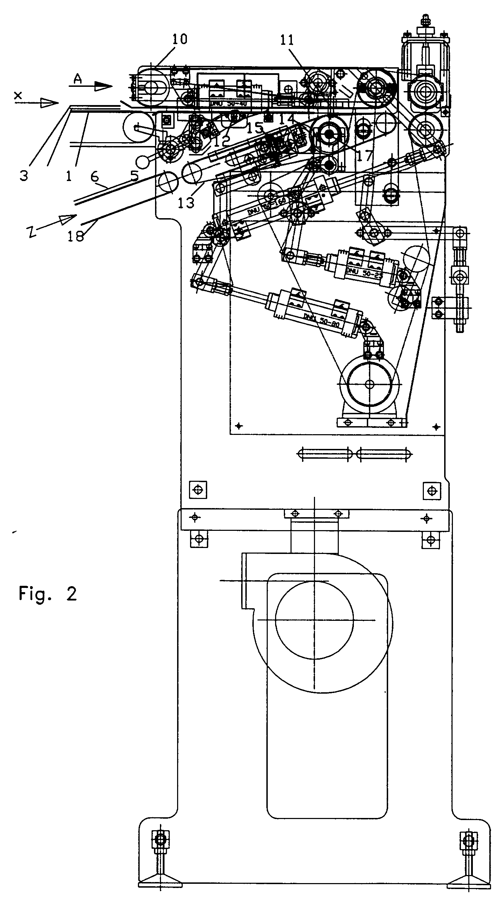

Über den Förderer 5 wird der mit dem oberen Deckbogen 3 kaschierte Trägerbogen 1 in eine zweite Kaschierstation 9 hineingefördert. Danach wird der einseitig kaschierte Trägerbogen 1 mit Hilfe eines Vakuumsaugbandes 10 von dem Förderer 5 übernommen und zu einem drehbar gelagerten Anschlag 11 transportiert und dadurch in Förderrichtung X ausgerichtet. Anschließend wird der einseitig kaschierte Trägerbogen 1 durch zwei variabel einstellbare Seitenstoßer 12 orthogonal zur Förderrichtung X, also seitlich, ausgerichtet. Von diesem Seitenstoßern 12 ist in Fig. 2 nur einer ersichtlich. Auf der gegenüberliegenden Seite ist ein eben solcher Seitenstoßer angeordnet. Die Seitenstoßer 12 sind motorisch, beispielsweise durch abwechselnd beidseitig hydraulisch oder pneumatisch mit Druckmitteldruck zu beaufschlagende Kolben-Zylinder-Einheiten, durch Linearmotoren oder dergleichen, angetrieben.

Wie aus Fig. 2 ersichtlich ist, kann der Anschlag 11 in die strichpunktierte Lage motorisch hochgeklappt bzw. gedreht werden.

Der untere Deckbogen 6 wird an seiner der Unterseite des einseitig kaschierten Trägerbogens 1 zugekehrten Seite beleimt und durch den motorisch angetriebenen Förderer 8 ebenfalls der zweiten Kaschierstation 9 zugeführt.

Ein ebenfalls motorisch angetriebener Förderer 13 übernimmt den beleimten unteren Deckbogen 6 und transportiert ihn zu einem drehbar gelagerten Anschlag 14. Der untere Deckbogen 6 richtet sich dadurch in seiner Transportrichtung Z aus.

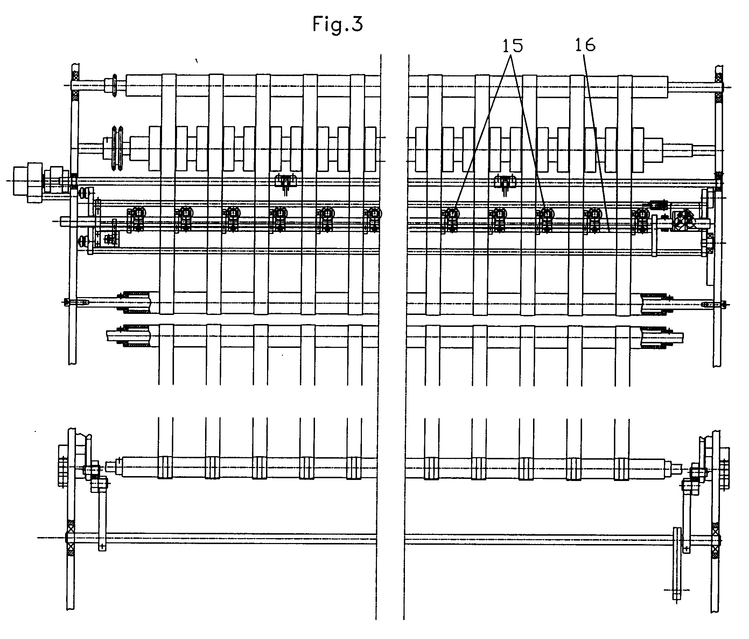

Anschließend wird der untere Deckbogen 6 durch eine Saugvorrichtung 15 angesaugt, die deutlicher in Fig. 3 dargestellt ist. Diese Saugvorrichtung 15 weist mehrere gleich große, seitlich auf einer geraden, orthogonal zur Förderrichtung Z verlaufenden Linie angeordnete Saugnäpfe auf, die jeweils über einen im einzelnen nicht bezeichneten Rohranschluß an ein Versorgungsrohr 16 angeschlossen sind, das an eine nicht dargestellte motorisch angetriebene Saugquelle, insbesondere an eine Unterdruckpumpe, angeschlossen ist.

Der untere Deckbogen 6 wird nun durch die Saugvorrichtung 15 und mit Hilfe eines motorischen Antriebes, zum Beispiel eines Schrittmotors, so lange seitlich verfahren, bis die richtige Lage in Bezug auf den Trägerbogen 1 erkannt ist, derart, daß der untere Deckbogen 6 paß- und kantengenau in Bezug auf die Unterseite des bereits einseitig oben kaschierten Trägerbogens 1 zu liegen kommt. Danach wird der Anschlag 14 in Offenstellung gesteuert und der angesaugte untere Deckbogen 6 durch eine Schlittenbewegung zu dem Trägerbogenanschlag 11 transportiert. Alsdann wird der drehbar gelagerte Anschlag 14 wegbewegt und der untere Deckbogen 6 wird durch eine Taktwalze 17 weitertransportiert, und zwar zu zwei einstellbaren Preßwalzen 18, die den einseitig kaschierten Trägerbogen 1 mit dem unteren Deckbogen 6 durch Kaschieren miteinander verbinden.

Die Antriebe und Bewegungen sind in eine geeignete Steuerung einbezogen und können von einem nicht dargestellten Bedienpult auch fernbedient werden.

Des weiteren ist es möglich, die Bewegungsabgänge auf einem PC abzurufen und zu beobachten.

Im Bedarfsfalle kann die Einrichtung auch nur zum einseitigen Kaschieren von Trägerbögen 1 verwendet werden.

Im Rahmen des Erfindungsgedankens liegen auch Lösungen, bei denen die zweite Kaschierstation 9 nur alleine verwendet wird.

Soweit in den Anmeldungsunterlagen von Förderern die Rede ist, kann es sich um Bandförderer oder Förderbänder handeln, die grundsätzlich als Stetigförderer arbeiten.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Patentansprüche

1. Verfahren zum beidseitigen Kaschieren eines Trägerbogens (1) mit je einem Deckbogen (3, 6), wobei die miteinander zu verbindenden mit Leim versehenen Bögen (1, 6) unter Druck miteinander einstückig verbunden werden, **dadurch gekennzeichnet,** daß im Durchlaufverfahren der Trägerbogen (1) an seiner Ober- und an seiner Unterseite mit je einem Deckbogen (3, 6) kaschiert wird.

2. Verfahren nach Anspruch 1, **dadurch gekennzeichnet,** daß der untere Deckbogen (6) der Unterseite des Trägerbogens (1) unter einem spitzen Winkel (β) zugeführt wird.

3. Verfahren nach Anspruch 1 oder 2, **dadurch gekennzeichnet,** daß der obere Deckbogen (3) unter einem spitzen Winkel (β) der Oberseite des Trägerbogens (1) zugeführt wird.

4. Verfahren nach Anspruch 1 oder einem der folgenden, **dadurch gekennzeichnet,** daß der obere Deckbogen (3) in Durchlaufrichtung (X) zuerst mit dem Trägerbogen (1) verbunden wird, bevor der untere Deckbogen (6) dem Trägerbogen (1) zugeführt und mit diesem durch Kaschieren verbunden wird.

5. Verfahren nach Anspruch 1 oder einem der folgenden, **dadurch gekennzeichnet,** daß der Deckbogen (6) mit Leim versehen wird.

6. Verfahren nach Anspruch 1 oder einem der folgenden, **dadurch gekennzeichnet,** daß der Trägerbogen (1) und der Deckbogen (6) jeweils in horizontaler Lage mit dem Leim versehen werden, bevor der Deckbogen (6) auf einer Bahn bewegt wird, die spitzwinklig zur Transportebene des Trägerbogens (1) verläuft.

7. Verfahren nach Anspruch 1 oder einem der folgenden, **dadurch gekennzeichnet,** daß mindestens der untere Deckbogen (6) in Bezug auf den Trägerbogen (1) quer und/oder in Durchlaufrichtung (X) des Trägerbogens (1) kanten- und paßgenau in Bezug auf den Trägerbogen (1) automatisch ausgerichtet wird.

8. Verfahren nach Anspruch 7, **dadurch gekennzeichnet,** daß mindestens der untere Deckbogen (6) durch Unterdruck zum Zwecke des Ausrichtens unabhängig vom Trägerbogen (1) transportiert wird.

9. Verfahren nach Anspruch 1 oder einem der folgenden, **dadurch gekennzeichnet,** daß der mit dem oberen Deckbogen (3) bereits kaschierte Trägerbogen (1) vor dem paßgenauen Zuführen und Kaschieren mit dem unteren Deckbogen (6) abgestoppt und quer zur Förderrichtung (X) ausgerichtet wird, bevor der untere Deckbogen (6) ausgerichtet und mit der Unterseite des Trägerbogens (1) verbunden wird.

10. Einrichtung zum beidseitigen Kaschieren von Trägerbögen (1) im Durchlaufverfahren mit mindestens einer Beleimungsvorrichtung, wenigstens einem Förderer (2) für den Trägerbogen (1) und einem Förderer (4) für den oberen Deckbogen (3), einer Preßvorrichtung zum Zusammenpressen und Kaschieren von Trägerbogen (1) und oberen Deckbogen (3), **dadurch gekennzeichnet,** daß unterhalb der horizontalen Förderbahn für den Trägerbogen (1) ein motorisch angetriebener Förderer (8) angeordnet ist, dessen Förderbahn unter einem spitzen Winkel (α) zur Förderbahn des Trägerbogens (1) verläuft, auf der der jeweilige untere Deckbogen (6) der Unterseite des Trägerbogens (1) zuführbar ist, wobei der untere Deckbogen (6) durch motorisch angetriebene, bewegliche Ausrichtvorrichtungen ausrichtbar und anschließend durch eine nachgeschaltete Kaschierstation (9) mit dem Trägerbogen (1) zu verbinden ist.

11. Einrichtung nach Anspruch 10, **dadurch gekennzeichnet,** daß sowohl einem Förderer (5) für den mit einem oberen Deckbogen (3) kaschierten Trägerbogen (1), als auch einem Förderer (8) für den unteren Deckbogen (6) je ein motorisch wegbewegbarer, jeweils in den Förderweg hineinragender Anschlag (11, 14) zugeordnet ist.

12. Einrichtung nach Anspruch 10 oder 11, **dadurch gekennzeichnet,** daß der mit dem oberen Deckbogen (3) bereits kaschierte Trägerbogen (1) nach seinem Anliegen gegen den zugeordneten Anschlag (11) durch wenigstens einen motorischen, insbesondere pneumatischen Seitenstoßer (12) seitlich bewegbar ist.

13. Einrichtung nach Anspruch 10 oder einem der folgenden, **dadurch gekennzeichnet,** daß der untere Deckbogen (6) durch eine Saugvorrichtung (15) bewegbar und in Bezug auf den Trägerbogen (1) paß- und kantengenau ausrichtbar ist.

14. Einrichtung nach Anspruch 13, **dadurch gekennzeichnet,** daß die Saugvorrichtung (15) mehrere quer zur Durchlaufrichtung (X) angeordnete Saugnäpfe aufweist, die über Zufuhrleitungen an ein Versorgungsrohr (16) angeschlossen sind, dem eine Unterdruckquelle zugeordnet ist.

15. Einrichtung nach Anspruch 10 oder einem der folgenden, **dadurc**h **gekennzeichnet,** daß der dem Trägerbogen (1) zugeordnete Anschlag (11) oberhalb der Förderbahn auf einem Kreisbogen taktweise wegschwenkbar ist, während der dem unteren Deckbogen (6) zugeordnete Anschlag (14) auf einem Kreisbogen nach unten taktweise wegschwenkbar ist.

16. Einrichtung nach Anspruch 10 oder einem der folgenden, **dadurch gekennzeichnet,** daß der untere Deckbogen (6) nach dem Einführen des an seiner Oberseite kaschierten Trägerbogens (1) in die zweite Kaschierstation (9) mit Hilfe eines Vakuumsaugbandes (10) von dem Förderer (8) übernommen, zu dem drehbar gelagerten Anschlag (14) transportiert und dadurch in seiner Laufrichtung ausgerichtet und anschließend der an seiner Oberseite mit dem oberen Deckbogen (3) kaschierte Trägerbogen (1) durch im Abstand zueinander angeordnete, variabel einstellbare Seitenstoßer (12) seitlich ausrichtbar ist.

17. Einrichtung nach Anspruch 10 oder einem der folgenden, **dadurch gekennzeichnet,** daß der untere Deckbogen (6) von einem spitzwinklig zur Unterseite der Förderbahn für den Trägerbogen (1) angeordneten Förderer (13) übernommen und zu dem drehbaren Anschlag (14) transportierbar ist.

18. Einrichtung nach Anspruch 10 oder einem der folgenden, **dadurch gekennzeichnet,** daß der untere Deckbogen (6) nach seinem Ansaugen durch die Saugvorrichtung (15) mit Hilfe eines gesteuerten Schrittmotors so lange seitlich verfahrbar ist, bis die richtige paß-und kantengenaue Lage in Bezug auf den Trägerbogen (1) durch optoelektronische Elemente erkannt ist.

19. Einrichtung nach Anspruch 18, **dadurch gekennzeichnet,** daß nach dem Erkennen der paß- und kantengenauen Lage des unteren Deckbogens (6) der zugeordnete Anschlag (14) öffnet und der angesaugte untere Deckbogen (6) durch eine Schlittenbewegung bis zu dem Anschlag (11) für den Trägerbogen transportierbar ist, der daraufhin öffnet, woraufhin der untere Deckbogen (6) durch eine Taktwalze (17) und zwei einstellbaren Preßwalzen (18) durch Kaschieren mit der Unterseite des Trägerbogens (1) zu verbinden ist.

20. Einrichtung nach Anspruch 10 oder einem der folgenden, **dadurch gekennzeichnet,** daß alle motorischen Antriebe einschließlich der Antriebe für die Förderer (2, 4, 5, 8), für die Anschläge (11, 14), für die Saugvorrichtung (15) und für den Schrittmotor in eine automatisch arbeitende Folgesteuerung einbezogen sind.

## Claims

1. Process for two sided lining of a support sheet (1) with one each cover sheet (3, 6), the sheets to be joined together, which are coated with glue (1, 6) being joined together in one piece under pressure; characterized in that, in a continuous process, the support sheet (1) is lined on its top and bottom sides with one each cover sheet (3, 6).

2. Process as claimed in Claim 1; characterized in that the lower cover sheet (6) is fed to the bottom side of the support sheet (1) at an acute angle (β).

3. Process as claimed in Claim 1 or Claim 2; characterized in that the upper cover sheet (3) is fed to the top side of the support sheet (1) at an acute angle (β),

4. Process as claimed in Claim 1 or in any of the following claims; characterized in that the upper cover sheet (3) is first joined with the support sheet (1) in grain direction (X), before the lower cover sheet (6) is fed to the support sheet (1) and joined therewith by lining.

5. Process as claimed in Claim 1 or in any of the following claims; characterized in that the cover sheet (6) is coated with glue.

6. Process as claimed in Claim 1 or in any of the following claims; characterized in that the support sheet (1) and the cover sheet (6) are each coated with glue in horizontal position, before the cover sheet (6) is moved on a track running at an acute angle to the transport plane of the support sheet (1).

7. Process as claimed in Claim 1 or in any of the following claims; characterized in that at least the lower cover sheet (6), in relation to the support sheet (1), is automatically aligned transversely and/or in grain direction (X) of the support sheet (1) true-to-edge and with hair line accuracy in relation to the support sheet (1).

8. Process as claimed in Claim 7; characterized in that at least the lower cover sheet (6) is transported independently of the support sheet (1) by vacuum for the purpose of alignment.

9. Process as claimed in Claim 1 or in any of the following claims; characterized in that the support sheet (1) already lined with the upper cover sheet (3) is stopped prior to feeding with hair line accuracy and lining with the lower cover sheet (6) and aligned transversely to the conveying direction (X), before the lower cover sheet (6) is aligned and joined with the bottom side of the support sheet (1).

10. Apparatus for two sided lining of support sheets (1) in a continuous process with at least one glueing device, at least one coveyor (2) for the support sheet (1) and one conveyor (4) for the upper cover sheet (3), and a pressing device for compressing and lining the support sheet (1) and the upper cover sheet (3); characterized in that underneath the horizontal conveyor track for the support sheet (1) there is arranged a motorized conveyor (8) whose conveyor track runs at an acute angle (α) to the conveyor track of the support sheet (1) on which the respective lower cover sheet (6) can be fed to the bottom side of the support sheet (1), the lower cover sheet (6) being alignable by motorized, movable aligning devices and having to be joined subsequently with the support sheet (1) by a downstream lining station (9).

11. Apparatus as claimed in Claim 10; characterized in that one each stop (11, 14) which can be moved away by motor power and, respectively, extends into the conveyor path is allocated to both a conveyor (5) for the support sheet (1) lined with an upper cover sheet (3) and a conveyor (8) for the lower cover sheet (6).

12. Apparatus as claimed in Claim 10 or Claim 11; characterized in that the support sheet (3) already lined with the upper cover sheet (3), after resting against the allocated stop (11), can be moved laterally by at least one, particularly pneumatic side pusher (12).

13. Apparatus as claimed in Claim 10 or in any of the following claims; characterized in that the lower cover sheet (6) is movable by a suction device (15) and alignable with hair line accuracy and true-to-edge in relation to the support sheet (1).

14. Apparatus as claimed in Claim 13; characterized in that the suction device (15) has several suction cups arranged transversely to the grain direction (X) which are connected via supply lines to a supply pipe (16) having a vacuum source allocated to it.

15. Apparatus as claimed in Claim 10 or in any of the following claims; characterized in that the stop (11) allocated to the support sheet (1) can be swung away cyclically above the conveyor track on a circular arc, while the stop (14) allocated to the lower cover sheet (6) can be swung away cyclically toward the bottom on a circular arc.

16. Apparatus as claimed in Claim 10 or in any of the following claims; characterized in that the lower cover sheet (6), following introduction of the support sheet (1) lined at its top side into the second lining station (9), is taken over by the conveyor (8) by means of a vacuum suction belt (10), transported to the pivoted stop (14) and thereby aligned in its grain direction and in that, subsequently, the support sheet (1) lined at its top side with the upper cover sheet (3) is laterally alignable by means of spaced, infinitely variable side pushers (12).

17. Apparatus as claimed in Claim 10 or in any of the following claims; characterized in that that lower cover sheet (6) is taken over by a conveyor (13) arranged at an acute angle to the bottom side of the conveyor track for the support sheet (1) and can be transported to the revolving stop (14).

18. Apparatus as claimed in Claim 10 or in any of the following claims; characterized in that the lower cover sheet (6), after having been sucked in by the suction device (15), is laterally traversible by means of a controlled stepping motor until the correct, true-to-edge position with hair line accuracy in relation to the support sheet (1) has been detected by opto-electronic elements.

19. Apparatus as claimed in Claim 18; characterized in that, following detection of the true-to-edge position with hair line accuracy of the lower cover sheet (6), the allocated stop (14) will open, and in that the sucked-in lower cover sheet (6) can be transported up to the stop (11) for the support sheet by a slide movement which, thereupon, opens, whereupon the lower cover sheet (6) is to be joined by means of a fixed-cycle roll (17) and two adjustable pressing rolls (18) by lining with the bottom side of the support sheet (1).

20. Apparatus as claimed in Claim 10 or in any of the following claims; characterized in that all motor drives including the drives for the conveyors (2, 4, 5, 8), for the stops (11, 14), for the suction device (15) and for the stepping motor are included in an automatically operating sequence control.

## Revendications

1. Procédé pour revêtir les deux faces d'une feuille-support (1) avec une feuille de couverture (3, 6) de chaque côté, les feuilles (1,6) enduites de colle et à relier entre elles l'étant sous pression et d'un seul tenant, **caractérisé en ce que** les faces supérieure et inférieure de la feuille-support (1), pendant le processus de traversée, sont revêtues chacune d'une feuille de couverture (3, 6).

2. Procédé selon la revendication 1, **caractérisé en ce que** la feuille de couverture inférieure (6) est amenée selon un angle aigu (β) vers la face inférieure de la feuille-support (1).

3. Procédé selon la revendication 1 ou 2, **caractérisé en ce que** la feuille de couverture supérieure (3) est amenée selon un angle aigu (β /α??) vers la face supérieure de la feuille-support (1).

4. Procédé selon la revendication 1 ou l'une des revendications suivantes, **caractérisé en ce que** la feuille de couverture supérieure (3) est, dans le sens de la traversée (X), reliée la première à la feuille-support (1), avant que la feuille de couverture inférieure (6) soit amenée à la feuille-support (1) qui en est ensuite revêtue.

5. Procédé selon la revendication 1 ou l'une des revendications suivantes, **caractérisé en ce que** la feuille de couverture (6) est enduite de colle.

6. Procédé selon la revendication 1 ou l'une des revendications suivantes, **caractérisé en ce que** la feuille-support (1) et la feuille de couverture (6) sont chacune enduites de colle lorsqu'elles se trouvent en position horizontale, et ce avant que la feuille de couverture (6) se déplace selon une trajectoire formant un angle aigu avec le plan de transport de la feuille-support (1).

7. Procédé selon la revendication 1 ou l'un des suivantes, **caractérisé en ce qu**'au moins la feuille de couverture inférieure (6) est automatiquement ajustée sur la feuille-support (1), transversalement au et/ou dans le sens de la traversée (X) de la feuille-support (1), en respectant les arêtes et le repérage de celle-ci (1).

8. Procédé selon la revendication 7, **caractérisé en ce qu**'au moins la feuille de couverture inférieure (6) est transportée par dépression dans le but de l'ajuster indépendamment de la feuille-support (1).

9. Procédé selon la revendication 1 ou l'une des revendications suivantes, **caractérisé en ce que** la feuille-support (1) déjà revêtue de la feuille de couverture supérieure (3) est immobilisée avant l'amenée - respectueuse du repérage - et l'application de la feuille de couverture inférieure (6), et est ajustée transversalement au sens de convoyage (X) avant que la feuille de couverture inférieure (6) soit ajustée et reliée à la face inférieure de la feuille-support (1).

10. Equipement servant à revêtir, selon un procédé de traversée, les deux faces de feuilles-supports (1), et comprenant au minimum un dispositif d'encollage, au moins un convoyeur (2) pour la feuille-support (1) et un convoyeur (4) pour la feuille de couverture supérieure (3), un dispositif de pressage servant à presser ensemble la feuille-support (1) et la feuille de couverture supérieure (3) qui la revêt, **caractérisé en ce qu**'en-dessous de la piste horizontale inférieure convoyant la feuille-support (1) se trouve un convoyeur (8) à entraînement motorisé dont la piste forme un angle aigu (α) par rapport à la piste de la feuille-support (1) permettant d'amener la feuille de couverture inférieure correspondante (6) contre la face inférieure de la feuille-support (1), la feuille de couverture inférieure (6) étant ajustable au moyen de dispositifs mobiles motorisés puis étant reliable à la feuille-support (1) par un poste de revêtement (9) situé en aval.

11. Equipement selon la revendication 10, **caractérisé en ce qu**'une butée (11, 14), éloignable sous l'effet d'un moteur et faisant saillie sur chaque itinéraire de convoyage, est affectée aussi bien à un convoyeur (5) transportant la feuille-support (1) revêtue d'une feuille de couverture supérieure (3) qu'à un convoyeur (8) transportant la feuille de couverture inférieure (6).

12. Equipement selon la revendication 10 ou 11, **caractérisé en ce que** la feuille-support (1) déjà revêtue de la feuille de couverture supérieure (3) est déplaçable latéralement par l'action d'au moins un poussoir latéral (12) motorisé, pneumatique en particulier, après qu'elle soit venue appliquer contre la butée (11) qui lui est affectée.

13. Equipement selon la revendication 10 ou l'une des revendications suivantes, **caractérisé en ce que** le feuille de couverture inférieure (6) est déplaçable par un dispositif d'aspiration (15) et exactement ajustable sur les bords et le repérage de la feuille-support (1).

14. Equipement selon la revendication 13, **caractérisé en ce que** le dispositif d'aspiration (15) présente plusieurs ventouses disposées transversalement au sens de la traversée (X), lesquelles sont raccordées, via des conduites d'amenée, à un tuyau d'alimentation (16) auquel est affecté un générateur de dépression.

15. Equipement selon la revendication 10 ou l'une des revendications suivantes, **caractérisé en ce que** la butée (11) affectée à la feuille-support (1) et située au-dessus de la piste de convoyage peut basculer en arrière de manière cyclique selon un arc de cercle, tandis que la butée (14) affectée à la feuille de couverture inférieure (6) peut basculer en arrière de manière cyclique en décrivant un arc de cercle vers le bas.

16. Equipement selon la revendication 10 ou l'une des revendications suivantes, **caractérisé en ce que** la feuille de couverture inférieure (6), après pénétration de la feuille-support (1) (dont la face supérieure en est revêtue) dans le second poste de revêtement (9), est prise en charge par le convoyeur (8) au moyen d'un tapis (10) aspirant par dépression, est transportée vers la butée (14) montée sur palier tournant qui en ajuste le sens de circulation, et en ce qu'ensuite la feuille-support (1) dont la face supérieure est revêtue de la feuille de couverture supérieure (3) est ajustable latéralement par les poussoirs latéraux (12) à réglage variable disposés à une certaine distance les uns des autres.

17. Equipement selon la revendication 10 ou l'une des revendications suivantes, **caractérisé en ce que** la feuille de couverture inférieure (6) est prise en charge par un convoyeur (13) formant un angle aigu par rapport au côté inférieur de la piste convoyant la feuille-support (1) et qu'elle est transportable vers la butée tournable (14).

18. Equipement selon la revendication 10 ou l'une des revendications suivantes, **caractérisé en ce que** la feuille de couverture inférieure (6), après avoir été aspirée par le dispositif d'aspiration (15), est déplaçable latéralement au moyen d'un moteur pas-à-pas piloté, jusqu'à ce que des éléments opto-électroniques aient reconnu qu'elle est exactement ajustée sur le repérage et les bords de la feuille-support (1).

19. Equipement selon la revendication 18, **caractérisé en ce qu**'une fois reconnu l'ajustement exact (sur les bords et le repérage de la feuille-support) de la feuille de couverture inférieure (6), la butée (14) qui lui est affectée s'ouvre et la feuille de couverture inférieure (6) aspirée devient transportable, par un mouvement glissant, vers la butée (11) de la feuille-support, laquelle butée s'ouvre ensuite, la feuille de couverture inférieure (6) étant ensuite à presser sur la face inférieure de la feuille-support (1) pour l'en revêtir au moyen d'un rouleau cyclique (17) et de deux rouleaux-presseurs réglables (18).

20. Equipement selon la revendication 10 ou l'une des revendications suivantes, **caractérisé en ce que** tous les entraînements motorisés y compris ceux des convoyeurs (2, 4, 5, 8), des butées (11, 14), du dispositif d'aspiration (15) et du moteur pas-à-pas sont intégrés dans une commande séquentielle opérant de manière automatique.
